# EUROPEAN PATENT APPLICATION

(11) **EP 1 940 072 A1**
(43) Date of publication of application: **02.07.2008**
(21) Application number: 06811898.3
(22) Date of filing: 17.10.2006
(51) Int. Cl.: H04L 9/08, G06F 21/24, G11B 20/10, H04N 5/91

(54) **RECORDING/REPRODUCING DEVICE OF TRANSMITTER AND RECORDING/REPRODUCING DEVICE OF RECEIVER**

(30) Priority: 18.10.2005 JP 2005303583
(71) Applicant: MATSUSHITA ELECTRIC INDUSTRIAL CO., LTD., Kadoma-shi, Osaka 571-0051 (JP)
(72) Inventor: AYAKI, Yasushi c/o Matsushita El.Ind.Co.Ltd., Shiromi, Chuo-ku, Osaka-shi, Osaka 540-6207 (JP); TANABE, Takumi c/o Matsushita El.Ind.Co.Ltd., Shiromi, Chuo-ku, Osaka-shi, Osaka 540-6207 (JP); NISHIMURA, Takuya c/o Matsushita El.Ind.Co.Ltd., Shiromi, Chuo-ku, Osaka-shi, Osaka 540-6207 (JP)
(74) Representative: Balsters, Robert
(86) International application number: PCT/JP2006/320652
(87) International publication number: WO 2007/046376

(57) **Abstract**

A conventional recording and reproducing apparatus cannot move second copyright-protected AV data while moving a first copyright-protected AV content when moving such AV data via a network because the recording and reproducing apparatus issues an exchange key to be used for decrypting the AV data to a single receiving-side recording and reproducing apparatus only.

The recording and reproducing apparatus of the present invention generates a new exchange key as a random number and transmits the new exchange key each time an exchange key for use in a move mode is requested; while it always transmits an identical exchange key when a normal exchange key is requested. The recording and reproducing apparatus selects an exchange key to be used according to the address of a recording and reproducing apparatus which is the transmission destination when encrypting an AV content to be transmitted.

## Description

### Technical Field

The present invention relates to a recording and reproducing apparatus which records and reproduces AV data assigned with copy control information.

### Background Art

Recent years have seen some networks connecting household apparatuses and enabling the apparatuses to share various kinds of contents. Meanwhile, in the case of handling copyright-protected data such as new movies, subscription television programs, and music products assigned with copy control information, a processing unit for protecting the copyright needs to be provided. An example of effective methods for protecting copyrights includes restricting use of copyright-protected data by encrypting the data.

For instance, in the case where copyright-protected video and audio data (hereinafter referred to as AV data) needs to be transmitted via a network, the AV data is encrypted before the transmission. As an example, the Digital Transmission Protection over Internet Protocol (DTCP-IP) has been standardized.

The DTCP-IP includes an authentication function and a key invalidation function. When AV data is transmitted, the DTCP-IP makes it possible to protect the copyright of copyright-protected AV data by eliminating unauthenticated apparatuses, encrypting the copyright-protected AV data, and transmitting the AV data.

The DTCP-IP defines a protocol for moving AV data assigned with copy control information of "No More Copies" to another recording and reproducing apparatus in which the AV data is recorded.

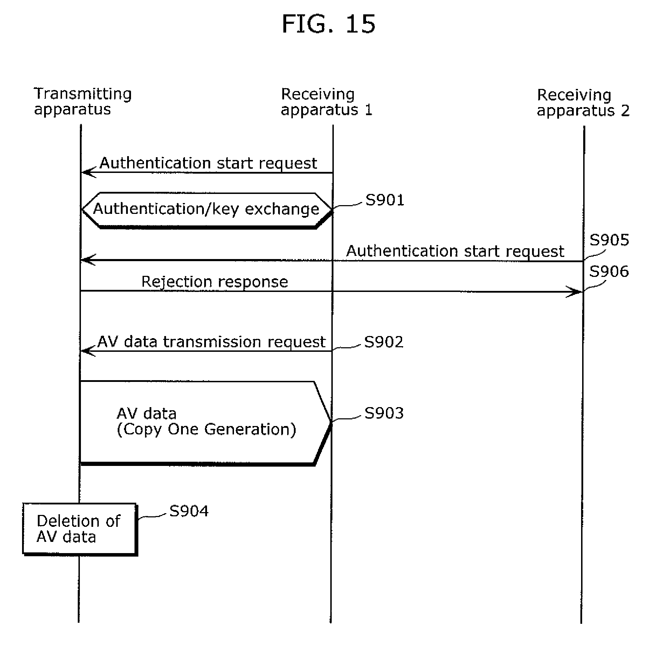

FIG. 15 is a diagram showing an execution sequence in the case where AV data is moved according to a conventional move scheme.

Firstly, authentication and key exchange are executed between a transmitting apparatus (transmitting-side recording and reproducing apparatus) and a receiving apparatus (receiving-side recording and reproducing apparatus). When mutual authentication has been successfully completed, the transmitting apparatus issues an exchange key to the receiving apparatus 1, and shares the exchange key (S901). In the case of a move execution mode, the transmitting apparatus issues the exchange key to a single receiving apparatus only. In the case where a receiving apparatus 2 which is another receiving apparatus requests authentication (S905), the transmitting apparatus rejects the request (S906). This disables other apparatuses from copying the encrypted AV data by decrypting the AV data.

Subsequently, the transmitting apparatus receives a transmission request for the AV data from the receiving apparatus (S902), rewrites, into Copy One Generation, the copy control information of the AV data read from an HDD, encrypts the AV data using an encryption key generated using the exchange key, transmits the AV data to the receiving apparatus 1 (S903), and deletes the transmitted AV data (S904). The receiving apparatus 1 decrypts the received AV data using a decryption key generated using the shared exchange key, changes the copy control information into "No More Copies", and records the AV data.
Patent Reference 1: Japanese Unexamined Patent Application Publication No. 2002-245718 (page 9)
Non-Patent Reference 1: Digital Transmission Content Protection Specification Revision 1.4 (Informative Version)

### Disclosure of Invention

### Problems that Invention is to Solve

However, in the conventional move scheme, the transmitting apparatus rejects an authentication request from another receiving apparatus during the period from when an exchange key is issued to a receiving apparatus to when a move is completed. This causes a problem that even another content cannot be moved while an AV content is being moved.

The present invention has been conceived considering the problem, and has an object to provide a transmitting-side recording and reproducing apparatus and a receiving-side recording and reproducing apparatus capable of: preventing unauthorized copying of copy-prohibited AV data in the case of moving the copy-prohibited AV data to another recording and reproducing apparatus via a network; and in a normal mode, simultaneously transmitting an identical AV content to plural recording and reproducing apparatuses, and in a move mode, simultaneously moving plural AV contents to plural recording and reproducing apparatuses respectively.

### Means to Solve the Problems

In order to solve the above-described problems, the transmitting-side recording and reproducing apparatus of the present invention includes: a recording and reproducing unit which records and reproduces AV data; a key exchange unit which generates key generation information in the case where key generation information for use in a move mode has been requested, the move mode being used for disabling use of AV data after the AV data is transmitted to a recording and reproducing apparatus which is a move destination; an encryption unit which encrypts the AV data using an encryption key generated using the key generation information when encrypting the AV data to be moved; and a transmitting unit which transmits the key generation information generated by the key exchange unit and the AV data encrypted by the encryption unit to the move-destination recording and reproducing apparatus.

In addition, the key exchange unit generates, as the key generation information, new key generation information in the case where generation of key exchange information for use in the move mode has been requested, and the encryption unit selects the key generation information transmitted to the move-destination recording and reproducing apparatus and encrypt the AV data to be moved using the generated encryption key generated by selecting the key generation information transmitted to the move-destination recording and reproducing apparatus.

Further, the key exchange unit generates, as the key generation information, key generation information different for each recording and reproducing apparatus which is a move destination when operating in the move mode, and the encryption unit encrypts the AV data using the encryption key generated using the key generation information.

In addition, the receiving-side recording and reproducing apparatus of the present invention includes: a key generation information receiving unit which requests key generation information for use in a move mode and receive the AV data in the case of receiving AV data outputted in the move mode, the move mode being used for disabling use of the AV data after the AV data is received; a receiving unit which receives the key generation information and the AV data; a decryption unit which decrypts the AV data using a decryption key generated using the key generation information; and a recording and reproducing unit which records and reproduces the decrypted AV data.

In addition, the receiving-side recording and reproducing apparatus further includes an identification information transmitting unit which transmits identification information of an apparatus to a transmitting-side recording and reproducing apparatus, and wherein the decryption unit decrypts the AV data using the identification information in the case where the AV data has been received by the receiving unit, and the recording and reproducing unit records and reproduces the AV data decrypted by the decryption unit.

In a normal mode where content viewing and the like are performed from the transmitting-side recording and reproducing apparatus, plural receiving-side recording and reproducing apparatuses having such structure can receive the AV data because identical key information is used. However, in a move mode, only a receiving-side recording and reproducing apparatus which is a move destination can decrypt the encrypted AV data because identical key information is never distributed to plural receiving-side recording and reproducing apparatuses.

In addition, the transmitting-side recording and reproducing apparatus of the present invention can encrypt AV data using a different encryption key in accordance with a receiving-side recording and reproducing apparatus which is a move destination in a move mode by encrypting the AV data using an encryption key generated using different key generation information in accordance with a receiving-side recording and reproducing apparatus which is the move destination when operating in the move mode.

### Effects of the Invention

With the recording and reproducing apparatus of the present invention, in the case where copy-prohibited AV data is moved to a second recording and reproducing apparatus via a network, it is possible to: prevent unauthorized coping of the copy-prohibited AV data; and in a normal mode, to simultaneously transmit an identical AV content to plural recording and reproducing apparatuses, and in a move mode, to simultaneously move plural AV contents to separate recording and reproducing apparatuses.

### Brief Description of Drawings

[FIG. 1] FIG. 1 shows how recording and reproducing apparatuses in embodiments of the present invention and other apparatus are connected.
[FIG. 2] FIG. 2 is a diagram showing the structure of a transmitting-side recording and reproducing apparatus in the embodiments of the present invention.
[FIG. 3] FIG. 3 is a diagram showing the format of an AV data packet in the embodiments of the present invention.
[FIG. 4] FIG. 4(a) is a diagram showing the format of an authentication start request command in the first embodiment of the present invention. FIG. 4(b) is a diagram showing the format of an authentication start command response in the first embodiment of the present invention.
[FIG. 5] FIG. 5(a) is a diagram showing the format of the recording acknowledgment notification command in the embodiments of the present invention. FIG. 5(b) is a diagram showing the format of the recording acknowledgment notification command response in the embodiments of the present invention.
[FIG. 6] FIG. 6 is a diagram showing the structure of the receiving-side recording and reproducing apparatus in the embodiment of the present invention.
[FIG. 7] FIG. 7 is a flowchart indicating authentication and key exchange processes of the transmitting-side recording and reproducing apparatus in the first embodiment of the present invention.
[FIG. 8] FIG. 8 is a diagram showing the structure of a receiving apparatus management table in the first embodiment of the present invention.
[FIG. 9] FIG. 9 is a diagram showing the details of the encryption and transmission processes performed by the transmitting-side recording and reproducing apparatus in the first embodiment and the second embodiment of the present invention.
[FIG. 10] FIG. 10 is a flowchart indicating the authentication and key exchange processes and encryption and transmission processes performed by the receiving-side recording and reproducing apparatus in the first and second embodiments of the present invention.
[FIG. 11] FIG. 11 is a diagram showing a sequence of communication between the transmitting-side recording and reproducing apparatus and a single receiving-side recording and reproducing apparatus in the first embodiment of the present invention performed in the case where AV data is moved to the single receiving-side recording and reproducing apparatus.
[FIG. 12] FIG. 12 is a diagram showing a sequence of communication between the transmitting-side recording and reproducing apparatus and plural receiving-side recording and reproducing apparatuses in the first embodiment of the present invention performed in the case where AV data is moved to the receiving-side recording and reproducing apparatuses.
[FIG. 13] FIG. 13 is a flowchart indicating the authentication and key exchange processes performed by the transmitting-side recording and reproducing apparatus in the second embodiment of the present invention.
[FIG. 14] FIG. 14 is a diagram showing an encryption key generating unit and a decryption key generating unit in the second embodiment of the present invention.
[FIG. 15] FIG. 15 is a diagram showing an execution sequence in the case where AV data is moved using a conventional move scheme.

### Numerical References

- 1, 2, and 3: Recording and reproducing apparatuses
- 4: Digital tuner
- 21: Transmitting and receiving unit
- 22: Encryption processing unit
- 23: Key exchange processing unit
- 24: Authentication processing unit
- 25: Copy control unit
- 26: HDD
- 31: Transmitting and receiving unit
- 32: Decryption processing unit
- 33: Key exchange processing unit
- 34: Authentication processing unit
- 35: Copy control unit
- 36: HDD
- S105: Exchange key generating process
- S153: Encryption key generating process for use in a move mode
- S107, and 5355: Process for updating receiving apparatus management table

### Best Mode for Carrying Out the Invention

Descriptions are given of embodiments of the present invention below with reference to the drawings.

(First Embodiment)

### First, a first embodiment is described.

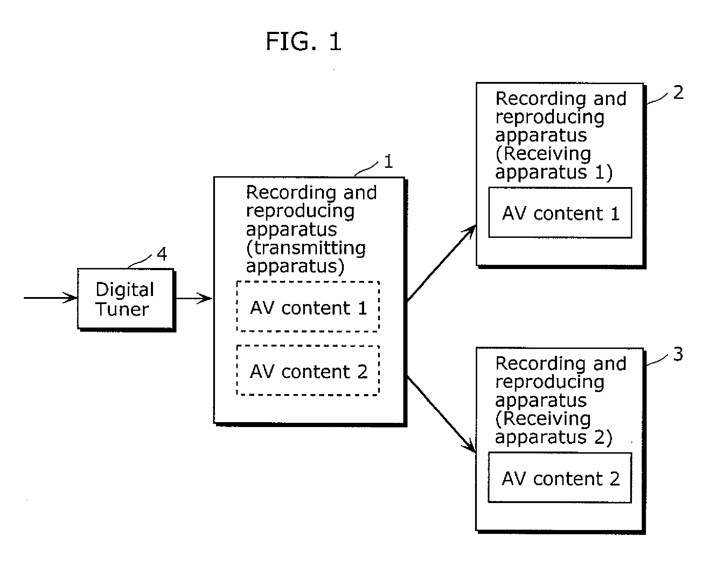

<Structure of Transmitting Apparatus>
FIG. 1 is a diagram showing how recording and reproducing apparatuses in this embodiment and other apparatus or a digital tuner are connected via a network.

In FIG. 1, a recording and reproducing apparatus 1, a recording and reproducing apparatus 2, a recording and reproducing apparatus 3 are connected via the network. The recording and reproducing apparatus 1 which is a transmitting apparatus on the network transmits an AV content received from a digital tuner 4 to the recording and reproducing apparatus 2 or the recording and reproducing apparatus 3 which are receiving apparatuses.

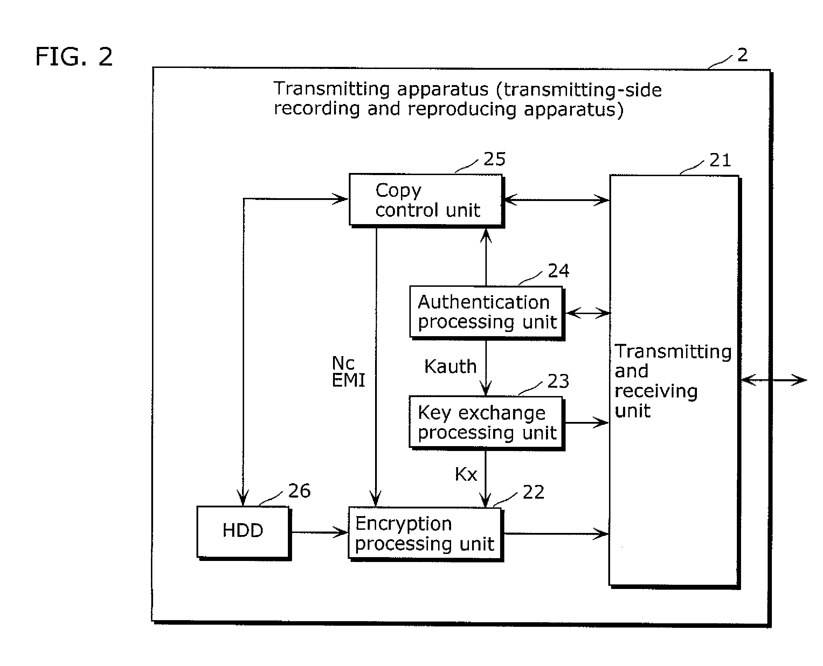

FIG. 2 is a diagram showing an HDD of the recording and reproducing apparatus 1 which is the transmitting-side recording and reproducing apparatus and the structure of the data transmitting and receiving unit.

The recording and reproducing apparatus 1 includes: a transmitting and receiving unit 21 which is an AV data transmitting unit, an encryption processing unit 22; a key exchange processing unit 23 which is a key exchange unit, an authentication processing unit 24, a copy control unit 25; and an Hard Disc Drive (HDD) 26 which is a recording and reproducing unit. The transmitting and receiving unit 21 is a digital interface for transmitting AV data on the network, and for transmitting and receiving a command and the like between other apparatuses connected on the network.

The encryption processing unit 22 encrypts AV data reproduced from the HDD 26. The encryption key (Kc) is generated using: an exchange key (Kx), which is key generation information in this embodiment, received from the key exchange processing unit 23; and copy control information (EMI) and a key update counter value (Nc) received from the copy control unit 25. The encrypted AV data is divided into AV data packets, and transmitted through the transmitting and receiving unit 21.

In the case of simultaneously outputting plural AV contents to plural receiving apparatuses, the encryption processing unit 22 generates, in advance, plural encryption keys using: exchange keys and the key update counter values respectively corresponding to the receiving apparatuses which are transmission destinations; and copy control information of the AV contents to be transmitted, encrypts the AV data in a time-division process where encryption keys are switched in accordance with the respective receiving apparatuses, and outputs the AV data simultaneously.

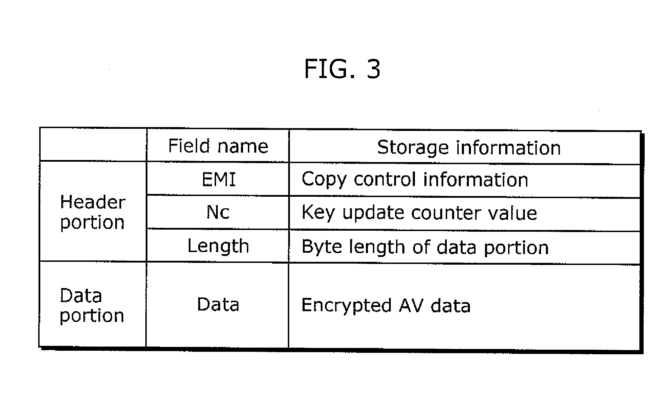

FIG. 3 is a format of an AV data packet. The AV data packet includes a header portion and a data portion. The header portion includes copy control information (EMI), a key update counter value (Nc), and a byte length (Length) of the data portion. The copy control information is identification codes including: "Copy Never", "No More Copies", "Copy One Generation", or "Copy Free" as copy control information of AV data; and "During Move". The "During Move" is set when AV data with "No More Copies" is moved. The key update counter value (Nc) is a value, in a counter, used when an encryption key and a decryption key are generated. The value is incremented by one in the copy control unit 25 of the transmitting apparatus each time a transmission request from a receiving apparatus is made and each time the amount of AV data to be transmitted in response to an AV data transmission request exceeds 128 MB. In this case, the transmitting apparatus divides the AV data into AV data packets each time the data amount exceeds 128 MB.

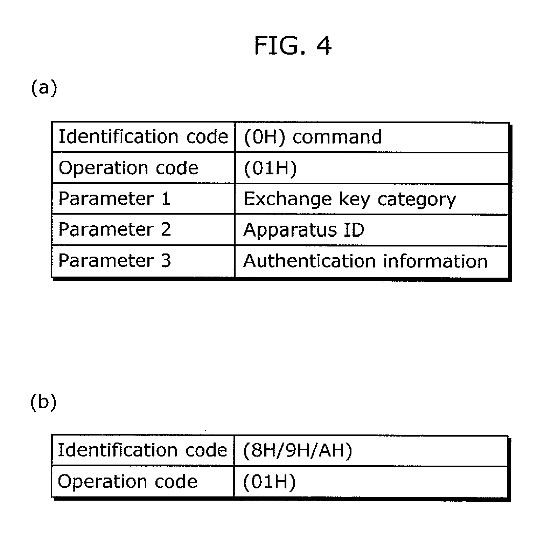

FIG. 4 is a diagram showing a format of an authentication start request command and a format of an authentication start command response. FIG. 4(a) shows the format of an authentication start request command, and FIG. 4(b) shows the format of an authentication start command response.

Among the identification codes in FIG. 4, 0H shows a command, and 8H/9H/AH show the following command responses, respectively.

8H NOT IMPLEMENTED
9H ACCEPTED
AH REJECTED
An operation code indicates a command identification, and 01H shows an authentication start command. As an operation code for a command response, the operation code of the command is set.

A succeeding field is for describing parameters unique to the command. In the case of an authentication start command in this embodiment, the field includes an exchange key category, an apparatus ID, and authentication information. The exchange key category is the category of the exchange key shared through the authentication key exchange process. 08H denotes a normal exchange key, and 10H denotes an exchange key for use in a move mode. The apparatus ID is apparatus-unique information for identifying a receiving apparatus. The authentication information is information such as a random number, a public key and the like used in the authentication process.

The key exchange processing unit 23 generates an exchange key (Kx) that receiving apparatus uses to decrypt the to-be-encrypted AV data, encrypts the AV data using authentication information (Kauth) received from the authentication processing unit 24, and outputs the AV data through the transmitting and receiving unit 21. In the case where the exchange key specified by the authentication start request command from the receiving apparatus is an exchange key for use in a move mode, a new exchange key is generated and recorded in a receiving apparatus management table so that the exchange key is associated with the apparatus ID and the IP address of the receiving apparatus.

The authentication processing unit 24 receives the authentication start request command from the receiving apparatus, executes an authentication process, and shares the authentication information (Kauth) with the receiving apparatus. In the case where the exchange key has already been distributed to thirty-four receiving apparatuses, a response of REJECTED is transmitted in response to the authentication start request command.

The copy control unit 25 processes the record acknowledgment notification command received from the receiving apparatus. In the case where it is judged that a move of AV data has failed, the copy control unit 25 rewrites the information in the AV data management table of the HDD 26, and keeps the transmitted data valid. In the other case where it is judge that a move of AV data has successfully completed, it rewrites the information in the AV data management table of the HDD 26, and invalidates the transmitted AV data. Further, the copy control unit 25 generates a command response to the record acknowledgment notification command and outputs the command response through the transmitting and receiving unit 21. In addition, the copy control unit 25 manages copy control information (EMI) and key update counter value (Nc).

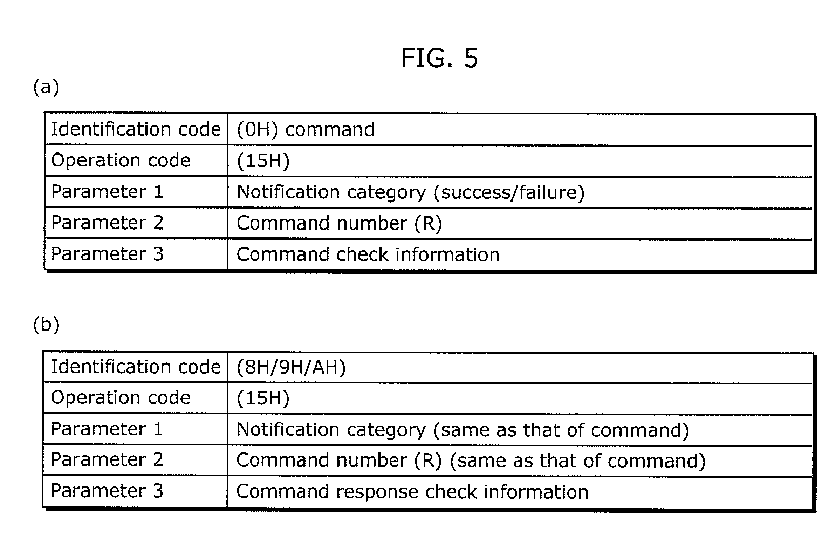

FIG. 5 is a diagram showing a format of a record acknowledgement notification command and a format of a record acknowledgement notification command response. FIG. 5(a) shows the format of the record acknowledgement notification command, and FIG. 5(b) shows the format of the record acknowledgement notification command response.

The details of the identification code in FIG. 5 are the same as those of the authentication start command in FIG. 4.

The transmitting apparatus transmits ACCEPTED when the AV data has been re-validated in response to a record acknowledgement command (Recording failed), but transmits REJECTED when the AV data has been not re-validated. In the case of a record acknowledgement command (Recording completed): the transmitting apparatus performs invalidation if there is AV data which should be invalidated, and transmits ACCEPTED; or transmits REJECTED if there is no AV data which should be invalidated.

Accordingly, depending on whether the identification code of the record acknowledgement command response is ACCEPTED or REJECTED, the receiving apparatus can find out that AV data has been invalidated or re-validated in the transmitting apparatus.

An operation code indicates a command identification, and 15H shows a record acknowledgement notification command. As an operation code for a command response, the operation code of the command is set.

The subsequent field is for describing parameters unique to the command. In the case of a record acknowledgement notification command in this embodiment, the field includes a notification category, a command number (R), and command check information. As the notification category, the result of a success or failure of the recording processing is set. The command number (R) is a random number as the initial value, and is incremented by one each time a record acknowledgement notification command is transmitted. The command check information is digital sign information which is generated using an exchange key (Kx) with respect to the notification category and command number (R).

As the notification category of the record acknowledgement notification command response and the command number (R), the same values as the parameters of the received command are set. The command check information is digital sign information which is generated using an exchange key (Kx) with respect to the notification category and command number (R).

In the HDD 26, AV data received from the digital tuner 3 and the AV data management table are recorded, and the AV data is outputted to the encryption processing unit 22.

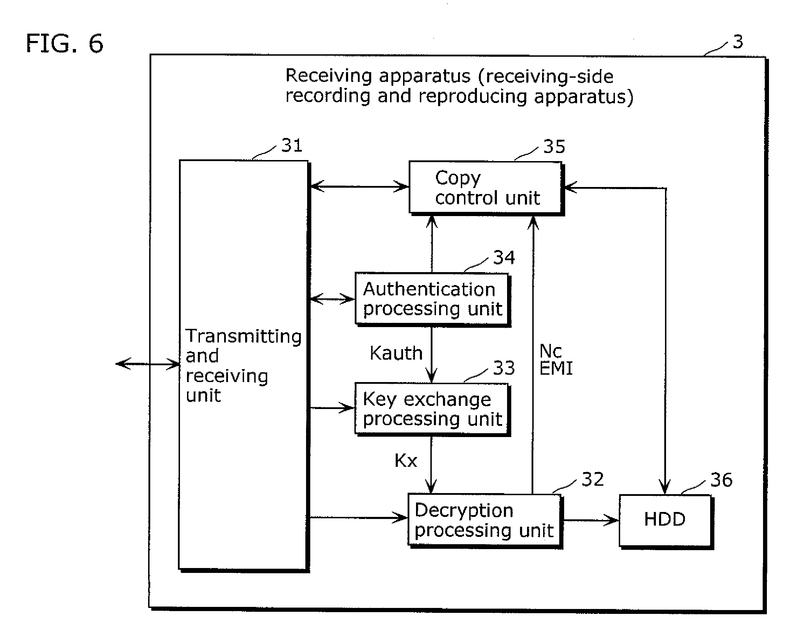

<Structure of Receiving Apparatus>
FIG. 6 shows the structure of an HDD and a data transmitting and receiving unit included in each of the receiving apparatus 1 (recording and reproducing apparatus 2) and the receiving apparatus 2 (recording and reproducing apparatus 3).

The receiving apparatus includes an AV data receiving unit, a transmitting and receiving unit 31 which is an acknowledgement notification transmitting unit and notification response receiving unit, a decryption processing unit 32, a key exchange processing unit 33, and an authentication processing unit 34, a copy control unit 35 which is a control unit, and an HDD 36. The transmitting and receiving unit 31 is a digital interface for receiving AV data transmitted via a network, and for transmitting and receiving a command and the like between other apparatuses connected on the network.

The decryption processing unit 32 generates a decryption key (Kc) using the exchange key (Kx) received from the key exchange processing unit 33, and the copy control information (EMI) and key update counter value (Nc) in the header portion of the AV data packet, and decrypts the received encrypted AV data. The AV data decrypted into plain text by the decryption processing unit 32 is recorded in the HDD 36.

The key exchange processing unit 33 decrypts the received exchange key using the authentication information (Kauth) received from the authentication processing unit 34, and transmits the exchange key to the decryption processing unit 32.

The authentication processing unit 34 transmits an authentication start request command to the authentication processing unit 24 of the recording and reproducing apparatus 1, executes an authentication process, and shares the authentication information (Kauth). The exchange key category of the authentication start request command is set to 10H in the case of requesting an exchange key for use in a move mode, and in the other case of requesting an exchange key for use in a normal mode, the exchange key category of the authentication start request command is set to 08H.

The copy control unit 35 receives the result of recording in the HDD 36, it generates a record acknowledgement notification command and outputs it through the transmitting and receiving unit 31, and processes the command response received through the transmitting and receiving unit 31. In the case where it is judged in the transmitting apparatus that the AV data has been invalidated, the copy control unit 35 rewrites the information in the AV data management table of the HDD 36, and validates the received data. In the other case where it is judged in the transmitting apparatus that the AV data has not been invalidated, it invalidates the received AV data.

In the HDD 36, AV data to be outputted by the decryption processing unit 35 and the AV data management table for managing AV data are recorded. In addition, the recording result indicating Recording completed or Recording failed is notified to the copy control unit 35. The format of the AV management table is the same as the one shown in FIG. 5.

Next, descriptions are given of operations of the transmitting apparatus and the receiving apparatus in this embodiment structured as described above.

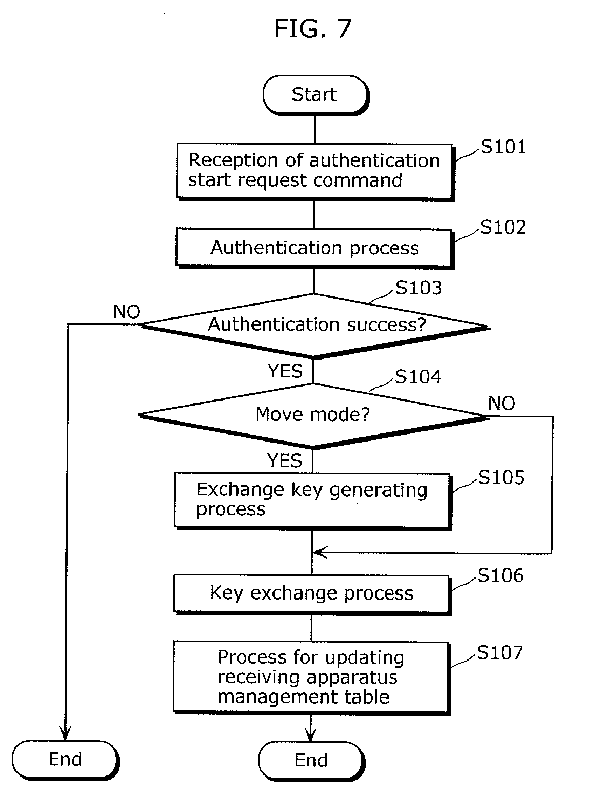

<Operations of Transmitting Apparatus>
FIG. 7 is a diagram showing authentication and key exchange processes at the time of encryption and transmission in the transmitting apparatus (recording and reproducing apparatus 1).

The authentication processing unit 24 of the transmitting apparatus receives an authentication start request command from the receiving apparatus (S101) and executes an authentication process (S102). In the case where the authentication by the receiving apparatus has failed, the authentication processing unit 24 completes the processes. In the other case where the authentication by the receiving apparatus has been successfully completed, the key exchange processing unit 23 checks the category of the exchange key requested by the authentication start request command (S104). In the case where the requested exchange key is for use in a move mode, the key exchange processing unit 23 generates a new exchange key which is a random number (S105), and in the other case where the requested exchange key is for use in a normal mode, it does not generate any new exchange key. Subsequently, the key exchange processing unit 23 executes a key exchange process S106, and updates the receiving apparatus management table (S107).

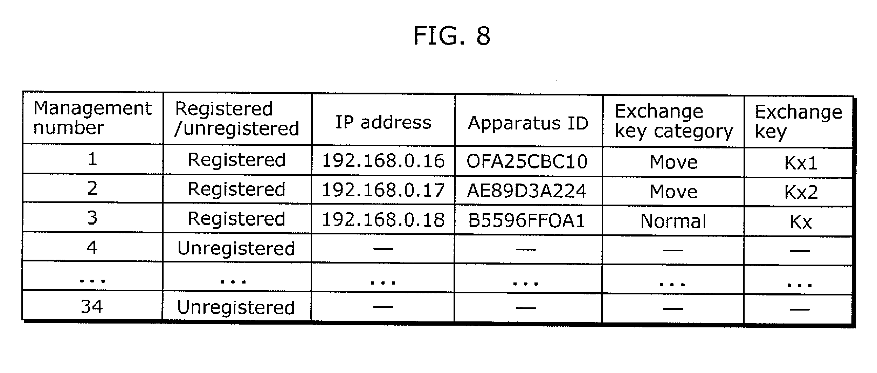

FIG. 8 is a diagram showing the structure of the receiving apparatus management table in the transmitting apparatus (recording and reproducing apparatus 1).

The receiving apparatus management table is intended for recording management information about thirty-four receiving apparatuses. In the table, the IP addresses of receiving apparatuses, the apparatus IDs, distributed exchange keys, and the categories of the exchange keys are recorded each time authentication and key exchange processes are executed. The receiving apparatus management table shown in FIG. 8 shows that: information about three receiving apparatuses are registered; an exchange key for use in a move mode has been distributed to two of the receiving apparatuses; an exchange key for use in a normal mode has been distributed to the other receiving apparatus; and information about the remaining thirty-one receiving apparatuses has not been registered yet in the receiving apparatus management table. The information registered in the receiving apparatus management table is initialized when the exchange keys are discarded according to a predetermined condition.

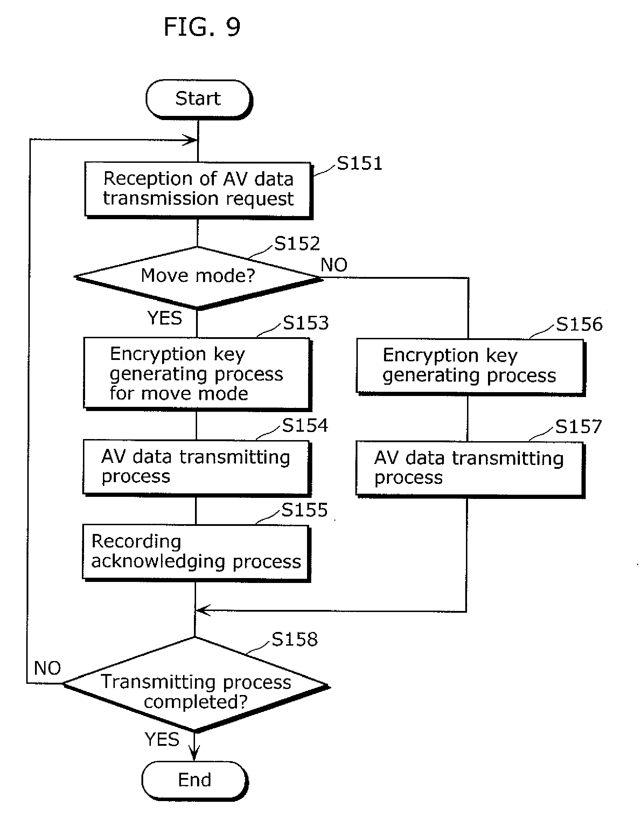

FIG. 9 is a flowchart of the processing executed by the transmitting apparatus (recording and reproducing apparatus 1) at the time of encryption and transmission.

The copy control unit 25 of the transmitting apparatus receives an AV data transmission request from the receiving apparatus 1 (S151), and checks whether the AV data transmission request is for moving the AV data in a move mode (S152).

In the case of a move mode, the transmitting apparatus generates an encryption key using an exchange key for use in a move mode (S153), and executes the AV data transmission process S154 and the record acknowledgement process S155 in a move mode. In the other case, the transmitting apparatus generates an encryption key using an exchange key for use in a normal mode (S156) and executes the AV data transmission process S157 in a normal mode.

Lastly, the transmitting apparatus judges whether the transmission process should be completed (S158). In the case where there remains any AV data which should be transmitted, the transmitting apparatus receives an AV data transmitting request from the receiving apparatus (S151) and repeats a transmission process.

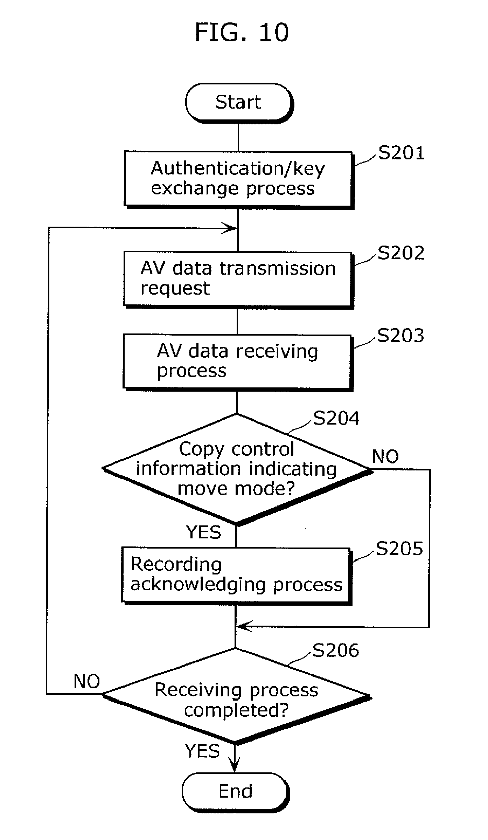

<Operations of Receiving Apparatus>
FIG. 10 is a flowchart of the processing from authentication and key exchange processes to encryption and transmission processes executed by the receiving apparatus (recording and reproducing apparatus 2 or recording and reproducing apparatus 3) at the time of encryption and transmission.

The authentication processing unit 34 of the receiving apparatus sets an exchange key category, transmits an authentication start request command to the transmitting apparatus, starts the authentication and key exchange processes (S201), and obtains the exchange key from the transmitting apparatus. Next, the copy control unit 35 of the receiving apparatus transmits, to the transmitting apparatus, an AV data transmission request for a move or normal transmission of the AV data (S202), and receives the AV data from the receiving apparatus (S203).

The copy control unit 35 of the receiving apparatus checks copy control information (EMI) stored in the header portion of an packet of the received AV data (S204), executes the record acknowledgement process S205 in the case of a move mode, but does not execute the record acknowledgement process in the other case. Lastly, the copy control unit 35 judges whether the AV data which should be received has been received (S206), and there is AV data which should be received, transmits an AV data transmission request to the receiving apparatus again (S202), and repeats a receiving process.

<Whole Operation Sequence>
Descriptions below are given of a whole operation sequence in a transmission process of AV data, based on the operations executed by the above-described transmitting apparatus and receiving apparatus.

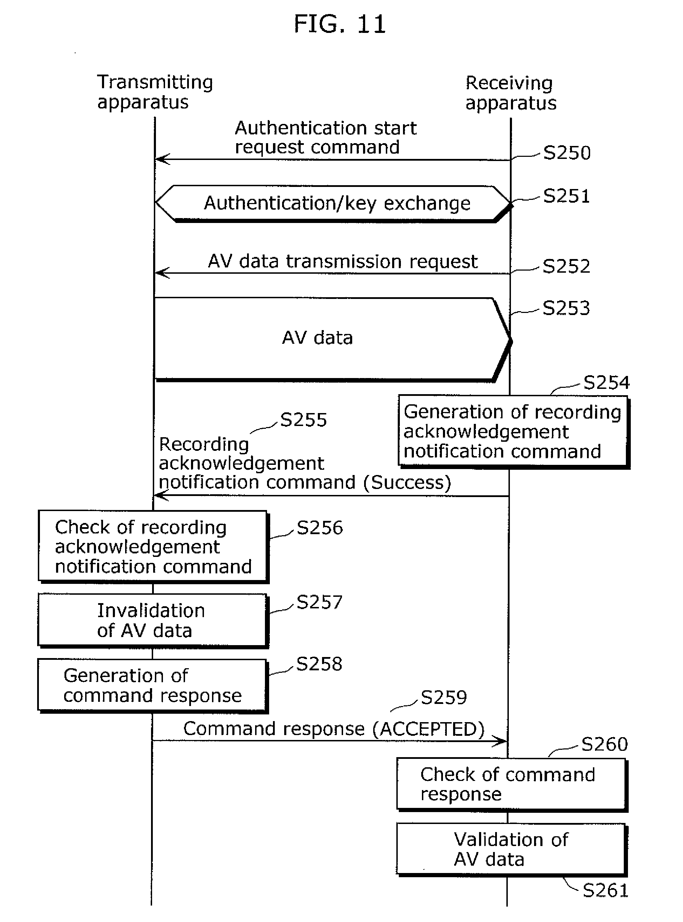

FIG. 11 is a diagram showing a sequence of communication between the transmitting apparatus and the receiving apparatus in the case where AV data is moved to a single receiving apparatus (the recording and reproducing apparatus 2 or the recording and reproducing apparatus 3).

First, the receiving apparatus transmits an authentication start request command (S250), and executes an authentication and key exchange processes (S251). Subsequently, the receiving apparatus transmits AV data transmission request to the transmitting apparatus (S252), and the transmitting apparatus transmits the requested AV data to the receiving apparatus 1 (S253). The receiving apparatus generates and transmits a record acknowledgement notification command for notifying the AV data has been successfully recorded upon the completion of the recording of the AV data into the HDD 36 (S254 and S255). The transmitting apparatus checks the record acknowledgment notification command (S256), and in the case where the check result is OK, invalidates the transmitted AV data (S257), generates and transmits a command response (ACCEPTED) (S258 and S 259). The receiving apparatus checks the command response (S260), and in the case where the check result is OK, validates the received AV data (S261) and completes the move process of the AV data.

In the case where the recording of the AV data has failed, the receiving apparatus generates and transmits a record acknowledgement notification command for notifying the failure of the recording. The transmitting apparatus checks the record acknowledgement notification command for notifying the failure of the recording, and in the case where the check result is OK, the transmitting apparatus re-validates the transmitted AV data, generates and transmits a command response (ACCEPTED). In this case, the AV data in the transmitting apparatus is kept without being invalidated. Therefore, even in the case where the recording of the AV data has failed in the receiving apparatus, the AV data never disappears.

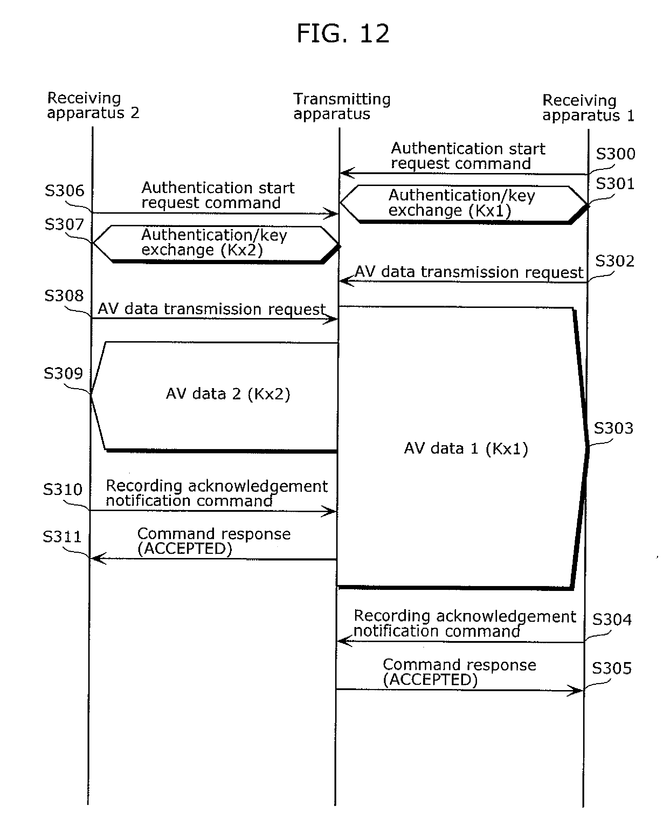

FIG. 12 is a diagram showing a sequence of communication between a transmitting apparatus and receiving apparatuses executed when AV data is moved to two receiving apparatuses (the receiving apparatus 1 and the receiving apparatus 2).

When the transmitting apparatus receives, from the receiving apparatus 1, an authentication start request command for requesting an exchange key for use in a move mode (S300), it executes authentication and key exchange processes S301, and records a newly-generated exchange key (Kx1) for use in a move mode, and the apparatus ID and the IP address of the receiving apparatus 1 in the receiving apparatus management table. When the receiving apparatus receives, from the receiving apparatus 2, an authentication start request command for requesting an exchange key for use in a move mode (S306), it executes authentication and key exchange processes S307, and records a newly-generated exchange key (Kx2) for use in a move mode, and the apparatus ID and the IP address of the receiving apparatus 2 in the receiving apparatus management table.

Next, when the receiving apparatus 1 transmits an AV data transmission request to the transmitting apparatus (S302), the transmitting apparatus searches the receiving apparatus management table for the IP address indicating the transmission source of the transmission request, obtains the exchange key K×1 of the receiving apparatus 1, encrypts the requested AV data 1 using the encryption key generated using Kx1, and transmits the AV data 1 to the receiving apparatus 1 (S303). In addition, when the receiving apparatus 2 transmits an AV data transmission request to the transmitting apparatus (S308), the transmitting apparatus searches the receiving apparatus management table for the IP address indicating the transmission source of the transmission request, obtains the exchange key Kx2 of the receiving apparatus 2, encrypts the requested AV data 2 using the encryption key generated using Kx2, and transmits the AV data 1 to the receiving apparatus 2 (S309).

The receiving apparatus 2 generates and transmits a record acknowledgement notification command for notifying the success of the recording upon completing the recording of the received AV data into the HDD (S310). The transmitting apparatus checks the record acknowledgment notification command, and in the case where the check result is OK, invalidates the transmitted AV data 2, generates and transmits a command response (ACCEPTED) (S311). The receiving apparatus 2 checks the command response, and in the case where the check result is OK, validates the received AV data and completes the move process of the AV data.

Likewise, the receiving apparatus 1 generates and transmits a record acknowledgement notification command for notifying the success of the recording upon completing the recording of the received AV data into the HDD (S304). The transmitting apparatus checks the record acknowledgment notification command, and in the case where the check result is OK, invalidates the transmitted AV data 1, generates and transmits a command response (ACCEPTED) (S305). The receiving apparatus 1 checks the command response, and in the case where the check result is OK, validates the received AV data and completes the move process of the AV data 1.

The following case is assumed: the case where, in transmission and reception of AV data between the transmitting apparatus, the receiving apparatus 1 and the receiving apparatus 2, a bridge apparatus is placed between the transmitting apparatus and the receiving apparatus 1 with an intention of copying the AV data 1 in an unauthorized manner, capturing encrypted AV data 1, and transmitting it also to the receiving apparatus 2. In this case, an exchange key Kx1 used for generating an encryption key and an exchange key Kx2 used for generating a decryption key are different from each other, and thus the receiving apparatus 2 cannot decrypt the encrypted AV data 1. Likewise, even when a bridge apparatus is placed between the transmitting apparatus and the receiving apparatus 2, and encrypted AV data 2 is transmitted to the receiving apparatus 1, the receiving apparatus 1 cannot decrypt the encrypted AV data 2.

As described above, in the case of moving AV data, the recording and reproducing apparatus of this embodiment is capable of simultaneously moving plural AV contents to separate recording and reproducing apparatuses by sharing exchange keys different for the respective receiving-side recording and reproducing apparatuses and encrypting the AV contents using the different encryption keys, while preventing unauthorized copying of the AV contents.

In this embodiment, exchange keys corresponding to key generation information are generated as random numbers, but it should be noted that such exchange keys may be generated as values incremented in sequence and may be generated through selection from a numerical value table where unique numbers are prepared in advance.

In addition, the exchange keys corresponding to key generation information are generated and transmitted for each request in this embodiment, but it should be noted that an identical exchange key may be transmitted to the identical receiving apparatus by identifying the receiving apparatus as the request source.

In addition, the encryption keys are generated using the exchange keys corresponding to key generation information, but it should be noted that the encryption keys themselves may be key generation information.

(Second Embodiment)
Next, a second embodiment is described.

<Outline>
This embodiment having a simple structure makes it possible to prevent unauthorized copying by generating an encryption key using identification information of each receiving apparatus which is the move destination.

<Structure>
A transmitting apparatus (transmitting-side recording and reproducing apparatus) in this embodiment and a receiving apparatus (receiving-side recording and reproducing apparatus) have structures similar to those of the first embodiment shown in FIG. 2 and FIG. 6. The second embodiment differs from the first embodiment in the authentication and key exchange processes and encryption key generating process in the transmitting apparatus, and in the decryption key generating process in the receiving apparatus, while the other processes are the same as those in the first embodiment.

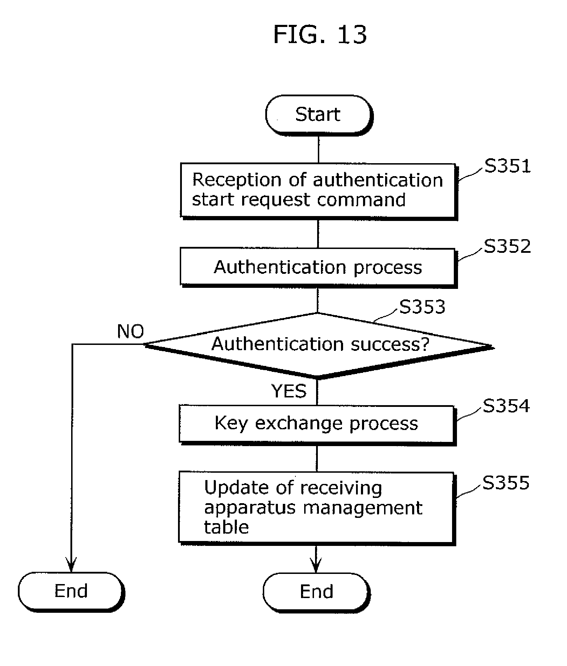

<Operations of Transmitting Apparatus>
FIG. 13 is a diagram showing authentication and key exchange processes at the time of encryption and transmission in the transmitting apparatus (recording and reproducing apparatus 1).

An authentication processing unit 24 of the transmitting apparatus receives an authentication start request command from the receiving apparatus (S351), and executes an authentication process S352. In the case where the authentication of the receiving apparatus has failed, the processing is completed. In the case where the authentication of the receiving apparatus has been successfully completed, the key exchange processing unit 23 executes a key exchange process 354, and a receiving apparatus management table update process (S355). In this embodiment, no exchange key for use in a move mode is generated.

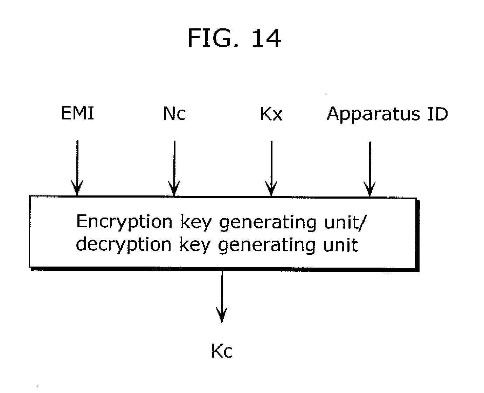

FIG. 14 shows an encryption key generating unit included in an encryption processing unit 22. The encryption processing unit 22 generates an encryption key using copy control information (EMI), a key update counter value (Nc), an exchange key (Kx) and the apparatus ID of the receiving apparatus which is the transmitting source.

The transmitting apparatus obtains the apparatus ID corresponding to the receiving apparatus by searching the receiving apparatus management table for the IP address indicating the transmitting source of the transmission request, generates an encryption key using the obtained apparatus ID, encrypting the requested AV data 2 using the generated encryption key, and transmits it to the receiving apparatus.

<Operations of Receiving Apparatus>
A decryption key generating unit included in the decryption processing unit 32 is shown in FIG. 14 as in the case of the encryption key generating unit of the transmitting apparatus.

The decryption processing unit 32 generates an encryption key using Nc, EMI, Kx and the apparatus ID of the apparatus itself.

The receiving apparatus generates a decryption key using the copy control information (EMI) and the key update counter value (Nc) which are included in the header portion of the received AV data packet, the exchange key (Kx) shared through the authentication and key exchange processes, and the apparatus ID of the apparatus itself. Here, decryption keys are generated uniquely to apparatus IDs respectively, in the case where the respective apparatus IDs are unique.

The following case is assumed: the case where, in transmission and reception of AV data between the transmitting apparatus and the receiving apparatus, a bridge apparatus is placed between the transmitting apparatus and the receiving apparatus with an intention of copying AV data in an unauthorized manner, capturing encrypted AV data, and transmitting it also to a different receiving apparatus. In this case, since the encryption key used for the encryption never matches the decryption key to be used for the decryption, the different receiving apparatus cannot decrypt the encrypted AV data.

In addition, in the case where the apparatus ID, which is a parameter of an authentication start request command to be transmitted by the receiving apparatus, is manipulated, the authentication process for the receiving apparatus fails and the receiving apparatus cannot receive any exchange key, thus the receiving apparatus cannot manipulate the apparatus ID.

As described above, in the case of moving AV data, the recording and reproducing apparatus of this embodiment is capable of simultaneously moving plural AV contents to separate recording and reproducing apparatuses by generating encryption keys using the apparatus IDs of the receiving-side recording and reproducing apparatuses which are the move destinations and encrypting the AV contents using the encryption keys, while preventing unauthorized copying of the AV contents.

In this embodiment, apparatus IDs are used as key generation information different for the respective receiving apparatuses, but it should be noted that any information may be used as long as the information cannot be manipulated and substantially different for each of the respective receiving apparatuses, and thus authentication information (Kauth) which is secret information shared through an authentication process may be used.

The receiving apparatus transmits the identification information of the apparatus itself as a parameter of an authentication start request command, but it should be noted that the identification parameter may be transmitted as any other parameters to be transmitted during the authentication and key exchange processes as long as the parameter cannot be manipulated.

In addition, in the first and second embodiments, the recording and reproducing apparatuses are divided into the transmitting apparatus and the receiving apparatuses, but it is obvious that the recording and reproducing apparatuses may have both the transmitting and receiving functions. In this case, the transmitting function and the receiving function may be provided to separate recording and reproducing units or to a single recording and reproducing unit.

In addition, in the first and second embodiments, the transmitting-side recording and reproducing apparatus starts transmission and reception of AV data in response to an AV data transmission request from the receiving-side recording and reproducing apparatus. However, it should be noted that transmission and reception of AV data may be started when the transmitting-side recording and reproducing apparatus transmits an AV data transmission request such as a POST request in HTTP to the receiving-side recording and reproducing apparatus.

In addition, an HDD is used as the recording and reproducing unit in the first and second embodiments, but the recording and reproducing unit in the present invention is not limited to HDDs, and the recording and reproducing unit may be an optical disc apparatus or a semiconductor memory.

In addition, in the first and second embodiments, while the transmitting-side recording and reproducing apparatus determines whether AV data is transmitted in a move mode according to an AV data transmission request from the receiving-side recording and reproducing apparatus, how to set a move mode is not limited to this. The move mode may be set through a user interface of the transmitting-side recording and reproducing apparatus.

In addition, in the first and second embodiments, while the receiving-side recording and reproducing apparatus determines that AV data is transmitted in a move mode according to copy control information assigned to the AV data, how to determine the move mode is not limited to this. The transmission mode may be determined according to a transmission mode notification from the transmitting-side recording and reproducing mode.

In addition, in the first and second embodiments, while AV data with "No More Copies" is recorded in the transmitting-side recording apparatus, AV data with "Copy Never" may be moved, and AV data with the other copy control information indicating copy-prohibited status may also be moved.

In addition, in the first and second embodiments, while a normal exchange key and an exchange key for use in a move mode are switched depending on a parameter of an authentication start request command, the receiving-side recording and reproducing apparatus may transmit a command for setting the category of the exchange key before transmitting the authentication start request command.

### Industrial Applicability

The recording and reproducing apparatus of the present invention is capable of simultaneously moving plural copy-prohibited AV contents to separate recording and reproducing apparatuses while preventing unauthorized copying of the AV contents when moving the AV contents to other recording and reproducing apparatuses via a network. Therefore, the recording and reproducing apparatus is useful in recording and reproducing apparatuses which record and reproduce AV data assigned with copy control information.

## Claims

1. A transmitting-side recording and reproducing apparatus comprising:
a recording and reproducing unit operable to record and reproduce AV data;
a key exchange unit operable to generate key generation information in the case where key generation information for use in a move mode has been requested, the move mode being used for disabling use of AV data after the AV data is transmitted to a recording and reproducing apparatus which is a move destination;
an encryption unit operable to encrypt the AV data using an encryption key generated using the key generation information when encrypting the AV data to be moved; and
a transmitting unit operable to transmit the key generation information generated by said key exchange unit and the AV data encrypted by said encryption unit to the move-destination recording and reproducing apparatus.

2. The transmitting-side recording and reproducing apparatus according to Claim 1,
wherein said key exchange unit is operable to generate, as the key generation information, new key generation information in the case where generation of key exchange information for use in the move mode has been requested, and
said encryption unit is operable to select the key generation information transmitted to the move-destination recording and reproducing apparatus and encrypt the AV data to be moved using the generated encryption key.

3. The transmitting-side recording and reproducing apparatus according to Claim 1,
wherein said key exchange unit is operable to generate, as the key generation information, key generation information different for each recording and reproducing apparatus which is a move destination when operating in the move mode, and
said encryption unit is operable to encrypt the AV data using the encryption key generated using the key generation information.

4. The transmitting-side recording and reproducing apparatus according to Claim 3,
wherein the key generation information generated by said key exchanging unit is a random number.

5. The transmitting-side recording and reproducing apparatus according to one of Claim 1 to 3, further comprising
an identification signal receiving unit operable to receive identification information of the move-destination recording and reproducing apparatus,
wherein said key exchange unit is operable to generate, as the key generation information, key generation information using the identification information received by said identification signal receiving unit.

6. The transmitting-side recording and reproducing apparatus according to one of Claims 1 to 3, further comprising
an authentication unit operable to authenticate said receiving-side recording and reproducing apparatus and share secret information,
wherein said key exchange unit is operable to generate, as the key generation information, key generation information using the secret information shared by said authentication unit.

7. The transmitting-side recording and reproducing apparatus according to one of Claim 1 to 3,
wherein said key exchange unit is operable to generate identical key generation information when a mode is not the move mode, and
said encryption unit is operable to encrypt the AV data using the encryption key generated using the key generation information.

8. A receiving-side recording and reproducing apparatus comprising;
a key generation information receiving unit operable to request key generation information for use in a move mode and receive the AV data in the case of receiving AV data outputted in the move mode, the move mode being used for disabling use of the AV data after the AV data is received;
a receiving unit operable to receive the key generation information and the AV data;
a decryption unit operable to decrypt the AV data using a decryption key generated using the key generation information; and
a recording and reproducing unit operable to record and reproduce the decrypted AV data.

9. The receiving-side recording and reproducing apparatus according to Claim 8, further comprising
an identification information transmitting unit operable to transmit identification information of an apparatus to a transmitting-side recording and reproducing apparatus,
wherein said decryption unit is operable to decrypt the AV data using the identification information in the case where the AV data has been received by said receiving unit, and
said recording and reproducing unit is operable to record and reproduce the AV data decrypted by said decryption unit.

10. An AV data transmitting method comprising:
a recording and reproducing step of recording and reproducing AV data;
a key exchange step of generating key generation information in the case where key generation information for use in a move mode has been requested, the move mode being used for disabling use of AV data after the AV data is transmitted to a recording and reproducing apparatus which is a move destination;
an encryption step of encrypting the AV data using an encryption key generated using the key generation information when encrypting the AV data to be moved; and
a transmitting step of transmitting the key generation information generated in said key exchanging step and the AV data encrypted in said encryption step to the move-destination recording and reproducing apparatus.

11. An AV data transmitting method according to Claim 10,
wherein, in said key exchanging step, new key generation information is generated as the key generation information in the case where generation of key exchange information for use in the move mode has been requested, and
in said encryption step, the key generation information transmitted to the move-destination recording and reproducing apparatus is selected, and the AV data to be moved is encrypted using the generated encryption key.

12. An AV data transmitting method according to Claim 10,
wherein, in said key exchange step, key generation information different for each recording and reproducing apparatus which is a move destination is generated as the key generation information when an operation is performed in the move mode, and
in said encryption step, the AV data is encrypted using the encryption key generated using the key generation information.

13. An AV data receiving method comprising:
a key generation information receiving step of requesting key generation information for use in a move mode and receiving the AV data in the case of receiving AV data outputted in the move mode, the move mode being used for disabling use of the AV data after the AV data is received;
a receiving step of receiving the key generation information and the AV data;
a decryption step of decrypting the AV data using a decryption key generated using the key generation information; and
a recording and reproducing step of recording and reproducing the decrypted AV data.

14. The AV data receiving method according to Claim 13, further comprising
an identification information transmitting step of transmitting identification information of an apparatus to a transmitting-side recording and reproducing apparatus,
wherein, in said decryption step, the AV data is decrypted using the identification information in the case where the AV data has been received in said receiving step, and
in said recording and reproducing step, the AV data decrypted in said decryption step is recorded and reproduced.

15. A program causing a computer to execute the AV data transmitting method or the AV data receiving method according to one of Claims 10 to 14.
